# EUROPÄISCHE PATENTSCHRIFT

(11) **EP 0 901 925 B1**
(45) Veröffentlichungstag und Bekanntmachung des Hinweises auf die Patenterteilung: **13.10.2004**
(21) Anmeldenummer: 98115000.6
(22) Anmeldetag: 10.08.1998
(51) Int. Cl.: B60K 15/03, B65D 21/02

(54) **Behälter zur Anordnung an einem Rahmen eines Fahrzeuges**
Modular tank for vehicles
Réservoir modulaire pour véhicule

(30) Priorität: 15.09.1997 DE 19740471
(43) Veröffentlichungstag der Anmeldung: 17.03.1999
(73) Patentinhaber: MAN Nutzfahrzeuge Aktiengesellschaft, 80976 München (DE)
(72) Erfinder: Tittel, Matthias, 85253 Erdweg (DE); Burger, Norbert, 84030 Ergolding (DE)

(56) Entgegenhaltungen:
- FR-A- 2 671 542
- GB-A- 2 039 980
- US-A- 2 097 113
- US-A- 3 511 515

## Beschreibung

Die Erfindung bezieht sich auf einen Behälter zur Anordnung an einem Rahmen eines Fahrzeuges gemäß dem Oberbegriff des Anspruches 1.

Aus der FR-A 2 671 542 ist ein aus standardisierten Einzelbehältern zusammensetzbarer Fahrzeugbehälter für Kraftstoff bekannt. Die Einzelbehälter weisen an ihrer, dem benachbarten Einzelbehälter zugewandten Flankenfläche einen mittig angeordneten, vorstehenden rohrförmigen Gewindestutzen mit Außengewinde auf, der mit einer gegenüberliegend angeordneten Öffnung der Seitenflanke des benachbarten Einzelbehälters über ein entsprechendes Innengewinde miteinander verschraub- und verbindbar ist. Die Anzahl der miteinander verschraubbaren Einzelbehälter ist beliebig erweiterbar.

Aus der EP 0 528 151 B1 ist ein Fahrzeugbehälter mit im wesentlichen gleich ausgebildeten standardisierten Einzelbehältem für den Transport unterschiedlicher Flüssigkeiten z. B. schlüssigen Eingriffs mit dem benachbarten Einzelbehälter kommunizierend miteinander verbunden und bilden gemeinsam den Tankaufbau eines Brandschutzfahrzeuges.

Die US 3 511 515 A offenbart einen Behälter für Fahrzeuge, an den endseitig jeweils ein Boden aus Metall angefalzt ist. Der Grundkörper des metallenden Behälters weist vor dem Anbringen der Böden mittels der Falze offene Enden auf.

Die US 2 097 113 A offenbart einen großvolumigen Tankbehälter eines Tankfahrzeuges, der aus einzelnen Behälterabschnitten zusammengesetzt ist.

Aus der EP 0 453 429 A2 ist ein Transportbehälter aus Metallblech bekannt, welcher aus einem umfangs geschlossenen Behälterabschnitt und zwei daran durch Falze befestigte Böden besteht. Derartige Behälter sind geeignet, an dem Rahmen eines Fahrzeuges durch Spannelemente befestigt zu werden.

Der Erfindung liegt die Aufgabe zugrunde, einen Behälter für Kraftfahrzeuge zu schaffen, der gegebenenfalls für die Aufnahme unterschiedlichster Inhalte vorgesehen und bei guter Anpassbarkeit an die jeweiligen Einbauverhältnisse am Fahrzeug wirtschaftlich günstig herstellbar ist.

Diese Aufgabe wird erfindungsgemäß durch die Merkmale des Anspruches 1 gelöst.

Durch die erfindungsgemäße Lösung ist ein Behälter aus im wesentlichen Metallwerkstoff gegeben, der zur Anordnung an dem Rahmen eines Fahrzeuges vorgesehen ist. Dabei weist der Behälter einen Behälterabschnitt mit umfangs geschlossener Querschnittsform und stirnseitig zunächst offenen Enden auf, an denen anschließend jeweils mittels eines umfangsseitig umlaufenden Falzes ein dicht abschließender Boden befestigt ist.

An wenigstens einem dieser Enden ist/sind mittels des umfangsseitig umlaufenden Falzes zumindest ein zusätzlicher Behälterabschnitt bzw. zusätzliche Behälterabschnitte in beliebig erweiterbarer Anzahl befestigt. Mittels der Falze sind zusätzlich sowohl zwischen als auch endseitig der Behälterabschnitte dicht abschließende Böden befestigt. Die einzelnen Behälterabschnitte weisen untereinander gegebenenfalls unterschiedliche Längen auf.

Der erfindungsgemäße Behälter ist wahlweise sowohl zur Aufnahme flüssiger oder gasförmiger Betriebsstoffe als auch zur Aufnahme von Funktionsteilen, wie beispielsweise von Geräten, Batterien, Werkzeuge oder dergleichen vorgesehen und in bedarfsweise erweiterbarer Anzahl horizontal aneinander anschließbarer Behälterabschnitte optimal an die jeweiligen Raumverhältnisse am Fahrzeug anpassbar. Somit sind je nach Volumen- und Inhaltbedarf des Behälters und entsprechend den räumlichen Gegebenheiten am Fahrzeug mehrere der gegebenenfalls unterschiedlich langen, als Mittel- und/oder Endabschnitte ausgebildeten Behälterabschnitte horizontal in Fahrzeuglängsrichtung in beliebig erweiterbarer Anzahl aneinanderreihbar und solcherart in räumlich optimierter Weise an einer Halterung des Fahrzeuges befestigt. Die jeweiligen Raumverhältnisse am Fahrzeug richten sich nach der Anordnung der vorhandenen Baugruppen, wie z. B. Auspuffanlage, Rußfilter, Wärmeisolierung, Batteriekasten, Luftbehälter, Bremsaggregate, Hydraulikaggregate, Kommunalaufbauten und dergleichen. Die einzelnen Behälterabschnitte des Behälters können generell verschiedene, zueinander jedoch einheitliche Querschnittsformen, wie beispielsweise Rohr- oder Ovalquerschnitte, aufweisen. Durch die umlaufenden Falze ist eine Kombination von verschiedenen Materialwerkstoffen und Materialdicken bezüglich der einzelnen Behälterabschnitte untereinander ermöglicht. Infolge der Verwendung von Falzverbindungen können unterschiedliche Blechdicken der jeweils unterschiedlichen Behälterabschnitte gefalzt werden. Solcherart gestaltbare Behälter können Behälterabschnitte zur Bevorratung unterschiedlichster Inhalte aufweisen. So kann beispielsweise ein erster Behälterabschnitt des Behälters einen Betriebsstoff, ein zweiter Abschnitt Druckluft und ein dritter Abschnitt beliebige Funktionsteile wie z. B. Batterien oder sonstige Gerätschaften bevorraten. Somit können in vorteilhafter Weise beispielsweise zusätzliche Batteriekästen oder zusätzliche Halterungen für Gerätschaften oder dergleichen entfallen.

Gemäß einer weiteren Ausgestaltung der Erfindung können die jeweils endseitig des modularen Fahrzeugbehälters angeordneten, an den einzelnen Behälterabschnitten anfalzbaren Böden vom Typ Abschlussboden und die zwischen zwei Behälterabschnitten angeordneten Böden vom Typ Schwallwand sein. Somit ist durch den erfindungsgemäßen Behälter eine technisch und wirtschaftlich besonders vorteilhafte Anbringung von Schwallwänden innerhalb desselben gegeben.

Einer weiteren Ausgestaltung der Erfindung zufolge können die Schwallwände bzw. die Anschlussböden an wenigstens einer Seite wenigstens einer Aushalsung mit horizontaler Anlagefläche aufweisen, die innenseitig des jeweiligen Behälterabschnittes zentrierend anliegt. Somit kann die Festigkeit der Falzverbindungen sowie deren Fertigung verbessert werden.

Gemäß einer weiteren Ausgestaltung der Erfindung können die Schwallwände aus einem bezüglich des übrigen Behälters verschiedenen Material bestehen, sofern die Darstellung einer belastbaren Falzverbindung dies zulässt. Der aus den Behälterabschnitten sowie den Anschlussböden bestehende Behälter kann aus einem Aluminium- oder einem Stahlwerkstoff oder dergleichen gefertigt sein.

Gemäß einer weiterführenden Ausgestaltung der Erfindung können die Behälterabschnitte im Anordnungsbereich ihrer Falze reduzierte Querschnitte aufweisen. Die umlaufenden Falze könne somit konturmäßig innerhalb von Außenquerschnitten der Behälterabschnitte anordbar sein.

Gemäß einer weiteren Ausgestaltung der Erfindung können die Behälterabschnitte sowie die Böden im Bereich ihrer gemeinsam gebildeten Falze zueinander unterschiedliche Blechstärken aufweisen. Gemäß einer weiteren Ausgestaltung der Erfindung können die die gemeinsamen Falze bildenden Bereiche der Behälterabschnitte bzw. der Böden gegenüber dem übrigen Behälter reduzierte Blechstärken aufweisen. Das Vorsehen reduzierter Blechstärken im Bereich der gemeinsam gebildeten Falze erweist sich bei deren Herstellung als vorteilhaft.

Gemäß einer weiteren Ausgestaltung der Erfindung können die Falze zusätzlich eine Klebung, eine Lötung bzw. eine Schweißung oder dergleichen aufweisen, wodurch die Qualität und die Haltbarkeit der Falzverbindung weiter erhöhbar ist.

Gemäß einer weiteren Ausgestaltung der Erfindung können die Behälterabschnitte Befüllungs- und/oder Entnahmeöffnungen aufweisen. Innerhalb der Schwallwände kann jeweils wenigstens ein Durchbruch für den Durchlass des jeweiligen Betriebsstoffes vorgesehen sein.

Gemäß einer weiterführenden Ausgestaltung der Erfindung kann wenigstens ein Behälterabschnitt des Behälters zur Aufnahme eines von den übrigen Behälterabschnitten verschiedenen Inhaltes vorgesehen sein. Gemäß einer weiteren Ausgestaltung der Erfindung können die die unterschiedlichen Inhalte bevorratenden Behälterabschnitte gegebenenfalls voneinander unabhängige Befüllungs- und/oder Entnahmeöffnungen aufweisen. Gemäß einer weiteren Ausgestaltung der Erfindung können die in den einzelnen Behälterabschnitten des Behälters bevorratbaren Inhalte vom Typ flüssiger oder gasförmiger Betriebsstoffe oder vom Typ Funktionsteile, beispielsweise Batterien, Gerätschaften usw. sein. Ein zur Aufnahme eines Funktionsteiles ausgebildeter Behälterabschnitt kann eine fahrzeugaußenseitig angeordnete Entnahmeöffnung aufweisen. Diese kann über entsprechend an der Außenseite des Behälters angeordnete und befestigte Deckel abschließbar sein. Des weiteren kann ein solcherart ausgebildeter Abschnitt eines Behälters in seinem Innenraum entsprechende Halterungen zur Befestigung der Funktionsteile bzw. der Geräte oder dergleichen aufweisen.

Als unterschiedliche Betriebsstoffe können flüssige Kraftstoffe unterschiedlicher Zusammensetzung oder Qualität, gasförmige Betriebsstoffe oder ein Ölvorrat in Betracht kommen. Die die verschiedenen Betriebsstoffe trennenden Schwallwände können ohne Durchbruch ausgebildet sein, oder eine den Durchbruch verschließende Vorrichtung aufweisen.

Gemäß einer weiteren Ausgestaltung der Erfindung kann ein endseitiger Behälterabschnitt des Behälters im fahrzeugaußenseitigen Bereich seines Außenquerschnittes eingearbeitete Trittstufen aufweisen. Die Kombination von Behälter und Trittstufen stellt eine besonders kostengünstige Lösung dar. Die Trittstufen können durch entsprechende Tiefziehverfahren in den jeweiligen Endabschnitt eingebracht sein. Auf die Trittstufen können zur Erhöhung der Trittsicherheit bekannte Trittplatten, Folien oder dergleichen aufgeklebt oder sonstwie befestigt sein.

Gemäß einer weiteren Ausgestaltung der Erfindung kann zwischen einer vertikalen Flanke des Falzes und einem an den reduzierten Querschnitten der Behälterabschnitte gebildeten vertikalen Absatz ein den Behälter an einem rahmenfesten Fahrzeugteil halterndes Spannelement formschlüssig einliegen. Auf diese Weise ist ein den Behälter halterndes Spannelement in kostengünstiger Weise ohne zusätzliche Halterungen am Fahrzeug befestigbar.

Gemäß einer weiteren Ausgestaltung der Erfindung können innen- oder außenseitig der Behälterabschnitte zusätzlich hieran anliegende Wärme- und/oder Geräuschisolierungen über die Falze befestigbar sein. Somit kann der erfindungsgemäße Behälter besonders raumsparend, beispielsweise in einem zu einem Auspufftopf benachbarten Bereich positioniert werden. Als Wärme- bzw. Geräuschisolierungen können entsprechend beschichtete oder ausgebildete Matten oder Bleche oder dergleichen vorgesehen sein. Der Behälter kann zur Anordnung an einem Rahmen eines Nutzfahrzeuges vorgesehen sein.

Nachfolgend ist die Erfindung anhand in der Zeichnung schematisch dargestellter Ausführungsbeispiele näher erläutert. In der Zeichnung zeigen:
- Fig. 1: eine erste Ausführungsart eines Behälters für Fahrzeuge im Schnitt,
- Fig. 2: schematisch eine zweite Ausführungsart eines Behälters gemäß Fig. 1 in vergrößerter Schnittdarstellung und
- Fig. 3: schematisch einen vergrößerten Ausschnitt der zweiten Ausführungsart gemäß Fig. 2.

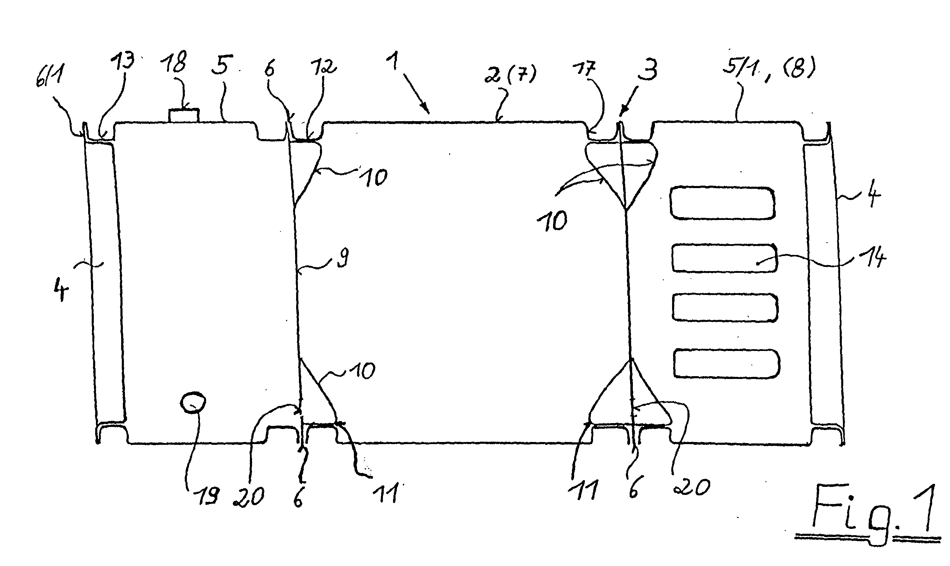

In Fig. 1 ist schematisch ein Querschnitt eines Behälters 1 eines Kraftfahrzeuges dargestellt. Der Behälter 1 ist in der hier gezeigten Version aus einem etwa rohrförmigen mittleren Behälterabschnitt 2 und jeweils an einem an seinen beiden stimseitigen Enden 3 angeschlossen, etwa rohrförmigen, endseitigen Behälterabschnitt 5, 5/1 zusammengesetzt. Dabei ist der mittlere Behälterabschnitt 2 über jeweils einen hier nur schematisch dargestellten Falz 6 mit dem jeweiligen endseitigen Behälterabschnitt 5, 5/1 verbunden. Anstelle von rohrförmigen Querschnitten der Behälterabschnitte 2, 5, 5/1 können alternativ hierzu andere Querschnitte verwendet sein. Der Behälter 1 ist jeweils endseitig seiner Behälterabschnitte 5, 5/1 mittels eines durch einen Falz 6/1 am jeweiligen Behälterabschnitt 5, 5/1 angefalzten, als Abschlussboden 4 ausgeführten Boden abgeschlossen. Des weiteren sind zwischen dem mittleren Behälterabschnitt 2 und den an ihm angeschlossenen endseitigen Behälterabschnitten 5, 5/1 zusätzlich hierzu als Schwallwände 9 ausgeführte Böden mittels der Falze 6 befestigt. Die in dieser Version nur schematisch gezeigten Falze 6, 6/1 können unterschiedliche Ausgestaltungsformen aufweisen. Die zwischen den Behälterabschnitten 2, 5, 5/1 angeordneten und durch Falze 6, 6/1 an diesen befestigten Schwallwände 9 weisen an wenigstens einer ihrer beiden Seiten eine gegebenenfalls diagonal verlaufende Aushalsung 10 auf. Die Aushalsungen 10 weisen jeweils eine durchgehend oder partiell ausgebildete, horizontale Anlagefläche 11 auf. Diese Anlagefläche 11 liegt innenseitig der jeweiligen Behälterabschnitte 2, 5, 5/1 an im Bereich der Falze 6 vorgesehener reduzierter Querschnitte 12, 13 an. Die Aushalsungen 10 können entweder einseitig an einer Stirnseite des Abschlussbodens 4 oder an einer Stirnseite der Schwallwand 9 oder beidseitig der Schwallwand 9 angeordnet sein. Die Aushalsungen 10 können entweder einstückig zusammen mit den Schwallwänden 9 bzw. Abschlussböden 4 gebildet sein oder durch separate, an den Schwallwänden 9 bzw. den Abschlussböden 4 befestigte Bauteile realisiert sein. Der in der rechten Zeichnungshälfte dargestellte endseitige Behälterabschnitt 5/1 weist zudem umfangsseitig seines Behältermantels eingeformte Trittstufen 14 auf. Diese sind in der Fig. 1 von einer Innenseite des Behälters 1 aus gezeigt. Der Abschlussabschnitt 5 weist oberseitig eine Befüllungsöffnung 18 und unterseitig eine Entnahmeöffnung 19 für den Behälter 1 auf. Die Schwallwände 9 sind mit Durchbrüchen 20 für den Durchlass des jeweiligen Betriebsstoffes versehen.

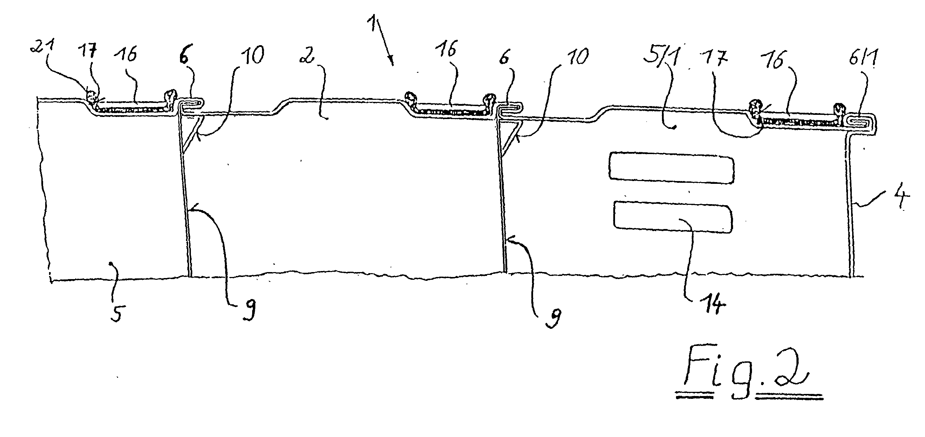

In Fig. 2 ist eine zweite Ausführungsvariante eines Behälters 1 in Schnittdarstellung gezeigt. Der Behälter 1 ist durch einen zylindrischen mittleren Behälterabschnitt 2 und durch an ihm über Falze 6 befestigte endseitige Behälterabschnitte 5, 5/1 erweitert. Der rechtsseitig des mittleren Behälterabschnitts 2 angeordnete, endseitige Behälterabschnitt 5/1 weist umfangsseitig seines Behältermantels angeordnete Trittstufen 14 auf, die hier von einer Innenseite des Behälters 1 aus gezeigt sind.

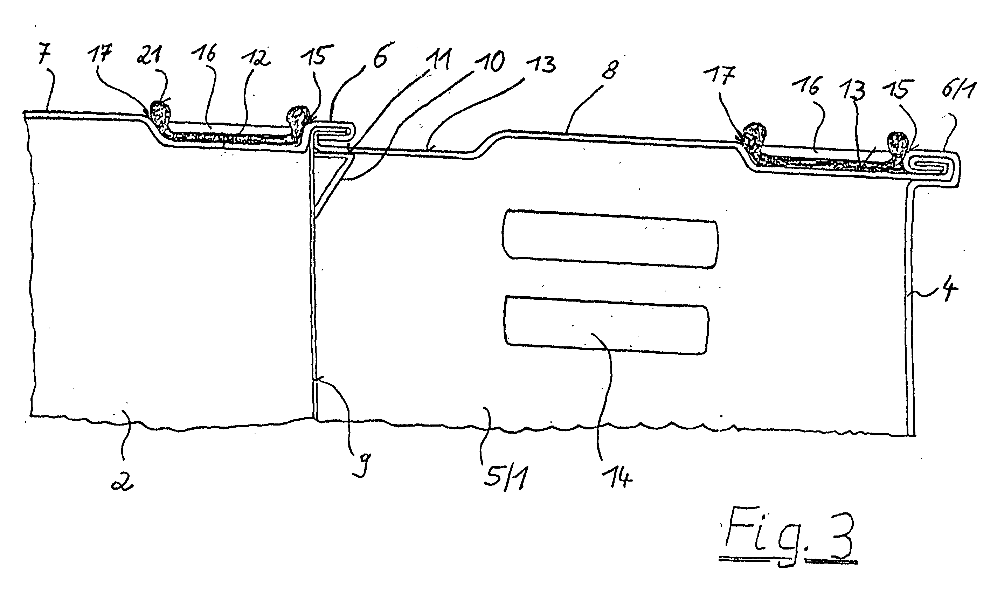

In Fig. 3 ist ein vergrößerter Ausschnitt gemäß des in Fig. 2 dargestellten Ausführungsbeispieles gezeigt. Dabei ist zwischen einer vertikalen Flanke 15 des Falzes 6 und einem an den reduzierten Querschnitten 12, 13 der Abschnitte 2, 5/1 gebildeten vertikalen Absatz 17 ein den Behälter 1 an einem rahmenfesten Fahrzeugteil halterndes Spannelement 16 formschlüssig eingelegt. Das Spannelement 16 ist in dieser Version von einer dieses formschlüssig untergreifenden Unterlage 21 eingefasst. Die Unterlage 21 liegt ihrerseits formschlüssig zwischen Absatz 17 und vertikaler Flanke 15 an.

## Patentansprüche

1. Behälter bestehend im wesentlichen aus Metallblech, zur Anordnung an dem Rahmen eines Fahrzeuges, wobei der Behälter (1) einen Behälterabschnitt (2) mit umfangs geschlossener Querschnittsform und stirnseitig zunächst offenen Enden (3) aufweist, an denen anschließend jeweils mittels eines umfangsseitig umlaufenden Falzes ein dicht abschließender Boden (4,9) befestigt ist, **dadurch gekennzeichnet, dass** an wenigstens einem dieser Enden (3) mittels des umfangsseitig umlaufenden Falzes (6, 6/1) zumindest ein zusätzlicher Behälterabschnitt bzw. zusätzliche Behälterabschnitte (5, 5/1) in beliebig erweiterbarer Anzahl befestigt ist bzw. sind, dass mittels der Falze (6, 6/1) zusätzlich sowohl zwischen als auch endseitig der Behälterabschnitte (2, 5, 5/1) dicht abschließende Böden (4, 9) befestigt sind, und dass die einzelnen Behälterabschnitte (2, 5, 5/1) untereinander gegebenenfalls unterschiedliche Längen aufweisen.

2. Behälter nach Anspruch 1, **dadurch gekennzeichnet, dass** die jeweils endseitig des Behälters (1) angeordneten, an den Behälterabschnitten (2, 5, 5/1) anfalzbaren Böden (4, 9) vom Typ Abschlussboden (4) und die zwischen zwei Behälterabschnitten (2, 5, 5/1) angeordneten Böden (4, 9) vom Typ Schwallwand (9) sind.

3. Behälter nach Anspruch 2, **dadurch gekennzeichnet, dass** die Schwallwände (9) bzw. die Abschlussböden (4) an wenigstens einer Seite wenigstens eine Aushalsung (10) mit horizontaler Anlagefläche (11) aufweisen, die innenseitig des jeweiligen Behälterabschnittes (2, 5, 5/1) zentrierend anliegt.

4. Behälter nach Anspruch 1, **dadurch gekennzeichnet, dass** die einzelnen Behälterabschnitte (2, 5, 5/1) im Anordnungsbereich ihrer Falze (6, 6/1) reduzierte Querschnitte (12, 13) aufweisen, und dass die Falze (6, 6/1) konturmäßig innerhalb von Außenquerschnitten (7, 8) der Behälterabschnitte (2, 5, 5/1) liegen.

5. Behälter nach einem oder mehreren der vorangegangenen Ansprüche 1 bis 4, **dadurch gekennzeichnet, dass** die Behälterabschnitte (2, 5, 5/1) sowie die Böden (4, 9) im Bereich ihrer gemeinsam gebildeten Falze (6, 6/1) zueinander unterschiedliche Blechstärken aufweisen, und dass die die gemeinsamen Falze (6, 6/1) bildenden Bereiche der Behälterabschnitte (2, 5, 5/1) bzw. der Böden (4, 9) gegenüber dem übrigen Behälter (1) reduzierte Blechstärken aufweisen.

6. Behälter nach einem oder mehreren der vorangegangenen Ansprüche 1 bis 5, **dadurch gekennzeichnet, dass** die Falze (6, 6/1) zusätzlich eine Klebung, eine Lötung bzw. eine Schweißung oder dergleichen aufweisen.

7. Behälter nach einem oder mehreren der vorangegangenen Ansprüche 2 bis 6, **dadurch gekennzeichnet, dass** wenigstens einer der Behälterabschnitte (2, 5, 5/1) Befüllungsund/oder Entnahmeöffnungen (18, 19) aufweist, und dass innerhalb der Schwallwände (9) jeweils wenigstens ein Durchbruch (20) vorgesehen ist.

8. Behälter nach einem oder mehreren der vorangegangenen Ansprüche 1 bis 7, **dadurch gekennzeichnet, dass** wenigstens ein Behälterabschnitt (2, 5, 5/1) des Behälters (1) zur Aufnahme eines von den übrigen Behälterabschnitten (2, 5, 5/1) verschiedenen Inhaltes vorgesehen ist, und dass die die unterschiedlichen Inhalte bevorratenden Behälterabschnitte (2, 5, 5/1) gegebenenfalls voneinander unabhängige separate Befüllungsund/oder Entnahmeöffnungen aufweisen, und dass die in den einzelnen Behälterabschnitten (2, 5, 5/1) des Behälters (1) bevorratbaren Inhalte vom Typ flüssiger oder gasförmiger Betriebsstoffe oder vom Typ Funktionsteile sind.

9. Behälter nach einem oder mehreren der vorangegangenen Ansprüche 1 bis 8, **dadurch gekennzeichnet, dass** ein endseitiger Behälterabschnitt (5/1) im fahrzeugaußenseitigen Bereich seines Außenquerschnittes (8) eingearbeitete Trittstufen (14) aufweist.

10. Behälter nach einem oder mehreren der vorangegangenen Ansprüche 1 bis 9, **dadurch gekennzeichnet, dass** zwischen einer vertikalen Flanke (15) des Falzes (6, 6/1) und einem an den reduzierten Querschnitten (12, 13) der Behälterabschnitte (2, 5, 5/1) gebildeten vertikalen Absatz (17) ein den Behälter (1) an einem rahmenfesten Fahrzeugteil halterndes Spannelement (16) formschlüssig einliegt, und dass innen- oder außenseitig der Behälterabschnitte (2, 5, 5/1) zusätzlich hieran anliegende Wärme- und/oder Geräuschisolierungen über die Falze (6/1) befestigbar sind, und dass der Behälter (1) zur Anordnung an einem Rahmen eines Nutzfahrzeuges vorgesehen ist.

## Claims

1. Tank (1) basically made of sheet metal, designed for arrangement on the frame of a vehicle and having a tank section (2) with a circumferentially closed cross-sectional shape and ends (3) initially open on the front face, to each of which ends (3) a tight-closing bottom (4, 9) is fitted by means of a circumferentially continuous seam, **characterised in that** to at least one of these ends (3) at least one additional tank section or additional tank sections (5, 5/1) can be fitted in an infinitely extendable number by means of the circumferentially continuous seam (6, 6/1), that, in addition, tight-closing bottoms (4, 9) are fitted both between the tank sections (2, 5, 5/1) and to the ends of said tank sections (2, 5, 5/1) by means of said seams (6, 6/1) and that the individual tank sections (2, 5, 5/1) may differ from one another in their length.

2. Tank according to Claim 1, **characterised in that** each of the bottoms (4, 9) which are arranged at the ends of the tank (1) and can be seamed on to the tank sections (2, 5, 5/1) are end bottoms (4) and the bottoms (4, 9) arranged between two tank sections (2, 5, 5/1) are baffle walls (9).

3. Tank according to Claim 2, **characterised in that** at least at one point the baffle walls (9) and the end bottoms (4) have a recess (10) with a horizontal contact face (11) which contacts the inside of the respective tank section (2, 5, 5/1) in a centring manner.

4. Tank according to Claim 1, **characterised in that** each of the bottom sections (2, 5, 5/1) have reduced cross-sections (12, 13) in the arrangement area of their seams (6, 6/1) and that the contours of the seams (6, 6/1) lie within the external cross-sections (7, 8) of the tank sections (2, 5, 5/1).

5. Tank according to one or several of the foregoing Claims 1 to 4, **characterised in that** in the area of their common seams (6, 6/1) the tank sections (2, 5, 5/1) and the bottoms (4, 9) differ from one another in the thickness of their sheet metal and that the areas of the tank sections (2, 5, 5/1) and of the bottoms (4, 9) that form the common seams (6, 6/1) are made of thinner sheet metal than the remainder of the tank (1).

6. Tank according to one or several of the foregoing Claims 1 to 5, **characterised in that**, in addition, the seams (6, 6/1) are glued, soldered, welded or attached in a similar fashion.

7. Tank according to one or several of the foregoing Claims 2 to 6, **characterised in that** at least one of the tank sections (2, 5, 5/1) has filling and/or extraction orifices (18, 19) and that at least one opening (20) is provided within the baffle walls (9).

8. Tank according to one or several of the foregoing Claims 1 to 7, **characterised in that** at least one tank section (2, 5, 5/1) of the tank (1) is provided for holding a content different from that of the remaining tank sections (2, 5, 5/1) and that the tank sections (2, 5, 5/1) holding different types of content may have separate filling and/or extraction orifices which are independent of one another and that the content stored in the individual tank sections (2, 5, 5/1) of the tank (1) is either liquid or gaseous service products or function parts.

9. Tank according to one or several of the foregoing Claims 1 to 8, **characterised in that** one end of the tank section (5/1) is provided with in-built steps (14) **in that** area of its external cross-section (8) on the outside of the vehicle.

10. Tank according to one or several of the foregoing Claims 1 to 9, **characterised in that** a clamping element (16) is positively inserted between a vertical flank (15) of the seam (6, 6/1) and a vertical protrusion (17) formed at the reduced cross-sections (12, 13) of the tank sections (2, 5, 5/1) and holds the tank (1) firmly fixed to a frame-mounted part of the vehicle and that in addition heat and/or noise-insulating elements contact the inside or outside of the tank sections (2, 5, 5/1) and can be fastened by means of the seams (6/1) and that the tank (1) is intended for fastening to a frame of a commercial vehicle.

## Revendications

1. Réservoir composé pour l'essentiel d'une tôle métallique, à fixer sur le cadre d'un véhicule, auquel cas le réservoir (1) présente une section de réservoir (2) avec une forme de section transversale fermée sur toute la circonférence et, sur le devant, des extrémités (3) tout d'abord ouvertes auxquelles un fond (4, 9) fermant de manière étanche est fixé ensuite au moyen d'une contrefeuillure sur toute la circonférence, **caractérisé par le fait qu'**à l'une de ces extrémités (3), au moins une section de réservoir supplémentaire ou des sections de réservoir supplémentaires (5, 5/1) est/sont fixée(s) selon le nombre souhaité au moyen de la contrefeuillure sur toute la circonférence, **par le fait qu'**au moyen de la contrefeuillure (6, 6/1), des fonds fermant de manière étanche (4, 9) sont fixés en supplément aussi bien entre les sections qu'à l'extrémité des sections du réservoir (2, 5, 5/1), et **par le fait que** chacune des sections de réservoir (2, 5, 5/1) présente, le cas échéant, des longueurs différentes les unes sous les autres.

2. Réservoir selon la revendication 1, **caractérisé par le fait que** les fonds (4, 9) disposés à chaque extrémité du réservoir (1) et fixés par contrefeuillure aux sections du réservoir (2, 5, 5/1) sont du type fonds de fermeture (4) et les fonds (4, 9) disposés entre deux sections de réservoir (2, 5, 5/1) sont du type paroi brise-lame (9).

3. Réservoir selon la revendication 2, **caractérisé par le fait que** les parois brise-lame (9) ou les fonds de fermeture (4) présentent, au moins sur une face, au minimum une courbure (10) avec une surface d'appui (11) horizontale, disposé en alignement à l'intérieur de chaque section de réservoir (2, 5, 5/1).

4. Réservoir selon la revendication 1, **caractérisé par le fait que** chacune des sections de réservoir (2, 5, 5/1) présente des sections transversales (12, 13) réduites dans la zone de disposition de leur contrefeuillure (6, 6/1) et **par le fait que** la contrefeuillure (6, 6/1) se situe en fonction du contour à l'intérieur de la section transversale extérieure (7, 8) des sections de réservoir (2, 5, 5/1).

5. Réservoir selon une ou plusieurs des revendications 1 à 4 mentionnées précédemment, **caractérisé par le fait que** les sections de réservoir (2, 5, 5/1) ainsi que les fonds (4, 9) présentent une épaisseur de tôle différente les uns par rapport aux autres au niveau de leur contrefeuillure (6, 6/1) formée en commun et **par le fait que** les parties formant la contrefeuillure (6, 6/1) commune des sections de réservoir (2, 5, 5/1) ou des fonds (4, 9) présentent des épaisseurs de tôle réduites par rapport au reste du réservoir (1).

6. Réservoir selon une ou plusieurs des revendications 1 à 5 mentionnées précédemment, **caractérisé par le fait que** la contrefeuillure (6, 6/1) présente en supplément un collage, une brasure ou une soudure.

7. Réservoir selon une ou plusieurs des revendications 2 à 6 mentionnées précédemment, **caractérisé par le fait qu'**au minimum une des sections de réservoir (2, 5, 5/1) présente des ouvertures de remplissage et/ou de prélèvement (18, 19) et **par le fait qu'**au minimum un passage (20) est prévu dans chaque paroi brise-lame (9).

8. Réservoir selon une ou plusieurs des revendications 1 à 7 mentionnées précédemment, **caractérisé par le fait qu'**au moins une section de réservoir (2, 5, 5/1) du réservoir (1) est prévue pour recevoir un contenu différent des autres sections de réservoir (2, 5, 5/1), **par le fait que** les sections de réservoir (2, 5, 5/1) stockant différents contenus présentent, le cas échéant, des ouvertures de remplissage et/ou de prélèvement séparées, indépendantes les unes des autres et **par le fait que** les contenus stockés dans chacune des sections de réservoir (2, 5, 5/1) du réservoir (1) sont du type moyens d'exploitation liquides ou gazeux ou du type pièces fonctionnelles.

9. Réservoir selon une ou plusieurs des revendications 1 à 8 mentionnées précédemment, **caractérisé par le fait qu'**une section de réservoir d'extrémité (5/1) présente un marchepied intégré (14) dans la partie côté extérieur du véhicule de sa section transversale extérieure (8).

10. Réservoir selon une ou plusieurs des revendications 1 à 9 mentionnées précédemment, **caractérisé par le fait qu'**entre un flanc vertical (15) de la contrefeuillure (6, 6/1) et un décrochement vertical (17) formé au niveau de la section transversale réduite (12, 13) des sections de réservoir (2, 5, 5/1), un élément de serrage (16) supportant le réservoir (1) sur une pièce du véhicule fixée au cadre est inséré de manière adhérente, **par le fait qu'**à l'intérieur comme à l'extérieur des sections de réservoir (2, 5, 5/1) peuvent être fixés en supplément des isolations thermiques et/ou phoniques posées sur la contrefeuillure (6/1) et **par le fait que** le réservoir (1) est prévu pour être disposé sur un cadre d'un véhicule industriel.
